(19) Europäisches Patentamt
European Patent Office
Office européen des brevets

(11) Publication number: **0 325 001**
**A1**

(12) # EUROPEAN PATENT APPLICATION

(21) Application number: **88202973.9**

(51) Int. Cl.4: **C08L 101/00 , C08L 67/02**

(22) Date of filing: **20.12.88**

(30) Priority: **23.12.87 NL 8703118**

(43) Date of publication of application:
**26.07.89 Bulletin 89/30**

(84) Designated Contracting States:
**AT BE CH DE ES FR GB GR IT LI NL SE**

(71) Applicant: **STAMICARBON B.V.**
**Mijnweg 1**
**NL-6167 AC Geleen(NL)**

(72) Inventor: **Koning, Cornelis Eme**
**Parkstraat 18**
**NL-6436 EL Schinnen(NL)**
Inventor: **Vriesema, Bindert Klaas**
**Burg. Luytenstraat 47**
**NL-6151 GE Sittard(NL)**
Inventor: **Nix, Frederik Ernst**
**Silhof 23**
**NL-6418 JV Heerlen(NL)**

(54) **Polymrer composition and a process for the preparation of such a polymer composition.**

(57) The invention relates to a polymer composition in which at least one of the polymers has a high melting point (> 250¤C) and in which at least one of the polymers is obtained by polycondensation. The polymer composition is obtained by mixing a prepolymer of a high-melting polymer with the melt of a thermoplastic polymer, after which the resulting mixture, is ground and subsequently after-condensed at a temperature of 200-360¤C during 1-40 hours.

The polymer composition possesses unique properties with respect to the chemical and thermal resistance and for this reason is eminently suitable for processing into ovenware.

EP 0 325 001 A1

# POLYMER COMPOSITION AND A PROCESS FOR THE PREPARATION OF SUCH A POLYMER COMPOSITION

The invention relates to a polymer composition and a process for the preparation of such a polymer composition, comprising several polymers, at least one of the polymers having a high melting point (Tm > 250¤C) and at least one of the polymers having been obtained by poly-condensation.

Polymer compositions comprising a polymer with a high melting point (Tm > 250¤C) and a second polymer are known from EP-A-30417. Mixing of the two polymers is possible only if there is a temperature range within which both polymers are liquid. If such a temperature range isn't available, the known process can't be applied. Furthermore a drawback of the polymer composition according to EP-A-30417 is the poor stability of the mixture. If the mixture has insufficient stability, undesired demixing and/or decomposition will occur when it is processed into a moulding compound.

The object of the invention is to provide a process for the preparation of a polymer composition in which it is possible to mix one or more polymers with a high melting point (Tm > 250¤C) with one or more polymers of which the decomposition temperature and/or the melting point is below the above-mentioned melting point, and in which no demixing or decomposition of one of the components will occur during processing of the polymer composition.

The process according to the invention is characterized in that the polymer composition is obtained by

a) mixing 1-99 wt.% of one or more prepolymers of a high-melting polymer with

b) 99-1 wt.% of one or more thermoplastic polymers of which the melting point and/or the decomposition temperature is lower than the melting point of the high-melting polymer, and

c) 0-50% of one or more prepolymers of a thermoplastic polymer according to component b)

after which the resulting mixture is ground and subsequently after-condensed during 1-40 hours at a temperature of 200-360¤C.

Surprisingly, it has been found that use of the process according to the invention renders it possible to mix two or more polymers, the decomposition temperature of one of which is below the melting point of a second one, to obtain a stable polymer composition with good processing properties. This has made it possible to prepare polymer compositions with unique properties, notably with respect to the chemical and the thermal resistance. Application of the process according to the invention, which involved mixing to incorporate an amount of the prepolymer into the thermoplastic polymer, gave rise to a substantial increase in the decomposition temperature of the latter.

In the process for the preparation of the polymer composition it is important that at least a prepolymer of the highest-melting polymer is incorporated by mixing.

A prepolymer is defined as being a polycondensate with a low number average degree of polymerization. P.J. Flory, Principles of Polymer Chemistry, 1953, New York, p. 81, gives the following formula:

$$\bar{P}n = \frac{1}{1-p}, \quad \text{where } p = \text{conversion of terminal groups}$$

$$\bar{P}n = \text{number average degree of polymerization}$$

A prepolymer is now defined as a polymer unit obtained by polymerization, the conversion of the condensation polymerization being at most 95%, preferably at most 92%.

A high-melting polymer as mentioned in a) is a high-molecular polymer in pure condition which corresponds to the prepolymer. The polymer has a number average degree of polymerization that is well in excess of 21. The process according to the invention is particularly suitable for high-melting polymers with a melting point higher than 350¤C.

The melting point (Tm) of a polymer is understood to be a temperature point at which the polymer becomes liquid. Depending on the type of polymer, the melting point may also denote a flow point.

Prepolymers of high-melting polymers preferably are linear condensates of bifunctional monomers, for instance prepolymers of liquid-crystalline polymers and/or of polyarylates. These prepolymers possess at least one or more aromatic units, for instance:

- units with an oxy-group and a carboxyl group
- units with two oxy-groups, and
- units with two carboxyl groups.

In general, a unit with an oxy-group and a carboxyl group has a formula

$O-R-\overset{O}{C}-O$, with R containing at least one aromatic ring. For instance

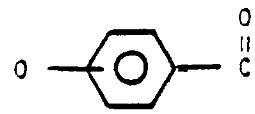

(Ia)

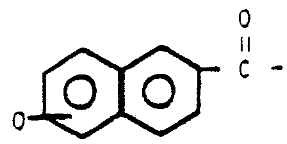

(Ib)

By preference the prepolymer in the polymer composition contains oxybenzoyl units of formula (Ia). These units originate from hydroxybenzoic acid or from derivatives thereof. Both the para- and the meta-substituted unit can be applied. Preferably unit (Ia) is para-substituted. In the aromatic ring one or more of the hydrogen atoms can be substituted by an alkyl group or alkoxy group with one to four carbon atoms, by a halogen, for instance chlorine, bromine and fluor, and/or by a phenyl group which, if desired, may be substituted.

Units with two oxy-groups generally have a formula O-R-O. Examples are:

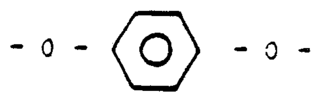

(II a)

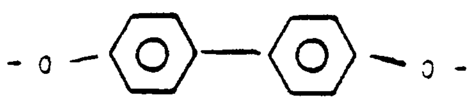

(II b)

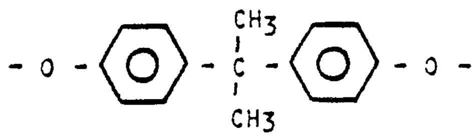

(II c)

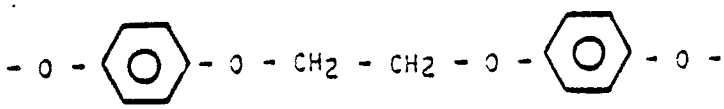

(II d)

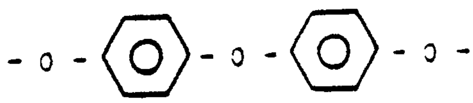

(II e)

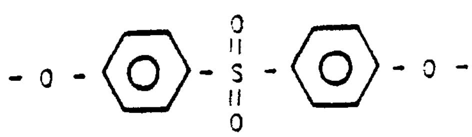

(II f)

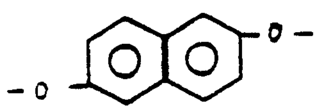

(II g)

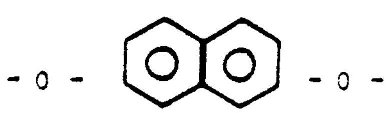

(II h)

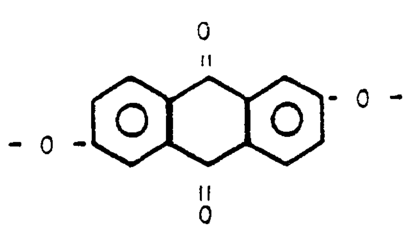

(II i)

The prepolymer in the polymer composition may also contain mixtures of the above-mentioned units, or dioxyalkane-units, derived for instance from ethylene glycol, neopentyl glycol or 1,4-butanediol. By preference the prepolymer according to the invention contains dioxyphenyl (IIa) and/or biphenoxy (IIb) groups, more in particular a biphenoxy group of formula (IIb). The latter compound can be obtained from p,p′-biphenol. In the aromatic rings one or more hydrogen atoms may be substituted by an alkyl and/or alkoxy group, a halogen, and/or a phenyl group, which in itself may also be substituted.

The aromatic units with two carboxyl groups can be obtained from aromatic dicarboxylic acids or from the corresponding esters, for instance terephthalic acid, isophthalic acid, 6,2-naphthalene dicarboxylic acid, 7,2-naphthalene dicarboxylic acid, bibenzoic acid, 4,4′-dicarboxylic diphenylsulphone, 4,4′-dicarboxydiphenylethane, 4,4′-dicarboxydiphenylsulphide, 4,4′-dicarboxydiphenylether, 4,4′-dicarboxydiphenylmethane, 4,4′-dicarboxydiphenoxyethane, 2,2-bis(4-carboxyphenyl)propane.

By preference the aromatic units with two carboxyl groups are obtained from terephthalic acid, isophthalic acid and/or the derivatives thereof. In the aromatic ring one or more hydrogen atoms may be substituted by an alkyl and/or alkoxy group, a halogen, and/or a phenyl group, the last of which may also be substituted. Preferably the units with two carboxyl groups are obtained from unsubstituted terephthalic acid and/or isophthalic acid.

Depending on the desired properties of the polymer composition the prepolymer may also contain an amine-containing unit, which can be obtained from known substances, for instance p-aminobenzoic acid, p-aminophenol, p-N-methyl-aminophenol, p-phenylene diamine, N-methyl-p-phenylene diamine, N,N′-dimethyl-p-phenylene diamine, m-aminophenol, 4-amino-1-naphthol, 4-amino-4′-hydroxydiphenyl, 4-amino-4′-hydroxyphenylether, 4-amino-4′-hydroxydiphenylmethane, 4-amino-4′-hydroxydiphenylethane, 4-amino-4′-hydroxydiphenylsulphone, 4-amino-4′-hydroxy-diphenyl-sulphide, 4,4′-diaminophenylsulphide, 4,4′-diaminodiphenyl-sulphone, 2,5-diaminotoluene, 4,4′-ethylene phenyldiamine, 4,4′-diaminodiphenoxyethane, 4,4′-diaminodiphenylmethane, 4,4′-diaminodiphenylether.

The prepolymer preferably is composed of units of the formula Ia, IIb, and of terephthalic and/or isophthalic acid. More in particular, the prepolymer displays anisotropy in the melt, in other words, the prepolymer is liquid-crystalline. It is also possible to combine the prepolymer with a prepolymer of the thermoplastic polymer.

The prepolymers are preferably prepared by reacting the monomers to be used, after acetylation with acetic anhydride, for some time at elevated temperature. The polymerization reaction takes place at between 150¤C and 350¤C, in an inert atmosphere, for instance nitrogen, until a polycondensate with the desired degree of polymerization is obtained. During the polymerization reaction the acetic acid formed and the excess of acetic anhydride are distilled off. The degree of polymerization can be measured by, for instance, determination of the amount of terminal groups or from the amount of acetic acid distilled off, corrected for the amount of acetic acid released in acetylation. It is possible, but not strictly necessary, to carry out the condensation or esterification in the presence of a catalyst, in the form of a salt, for instance lithium acetate, sodium acetate, potassium acetate, magnesium acetate, calcium benzoate, magnesium acetylacetonate, zinc acetylacetonate, zinc acetate, zinc butylate, zirconium propylate, dibutyltindiacetate or sodium phenolate. The catalyst is added in amounts of up to 1 wt.%, calculated on the total weight of the monomers used.

The polymerization is stopped by cooling, following which the solidified prepolymer is preferably finely ground. The melting point of the prepolymer is substantially below that of the high-molecular polymer corresponding to the prepolymer, with a number average degree of polymerization of well in excess of 21. The melting point of the prepolymer in the polymer composition according to the invention is preferably 200-360¤C.

The thermoplastic polymer in the polymer composition obtained by the process according to the invention is chosen from, for instance: polyesters, polyamides, polycarbonates, copolyester carbonates, polyphenylene-ethers and -sulphides, polyarylenes, polyarylates, poly sulphones, polyarylene-ether ketones or -sulphones, poly(amide) imides, polyether imides, polyethersulphones, vinylaromatic polymers, polyether(-ether) ketones, polyacetales, polyacrylates or combinations thereof.

The polyesters are thermoplastic resins composed of dihydroxy units, for instance ethylene glycol, propylene glycol, 1,4-butanediol, neopentyl glycol, bisphenol-A and from dicarboxylic acids, for instance terephthalic acid, isophthalic acid, oxalic acid, fumaric acid, succinic acid, adipic acid. Examples of such polyesters are polyethylene terephthalate, polybutylene terephthalate and polyethylene-isophthalate-terephthalate copolymers.

The polyamides are the conventional polyamide resins known by the name nylon, including the aliphatic polylactams such as polycaprolactam and nylon 6. Polyamides are obtained by polycondensation of aliphatic, alicyclic and aromatic diamines and dicarboxylic acids or by anionic polymerization of lactams, for instance -caprolactam. In this way polyamides such as nylon 4.6, nylon 6.6, nylon 6.10, nylon 9, nylon 11, nylon 12, nylon 6/6.6, nylon 6.6./6.10 and nylon 6/11 can be obtained.

Polycarbonates are obtained by conversion of dihydroxy or polyhydroxy compounds with phosgene or with diesters of carboxylic acids. The dihydroxy compounds are the known dihydroxy-diaryl-alkanes; 4,4-dihydroxy-2,2-diphenylpropane, tetramethylbisphenol A, tetrachlorobisphenol A, tetrabromo-bisphenol A and bisphenol A.

Polyarylene-ethersulphones or ketones are linear thermoplastic polymers in which a sulphone or a ketone group, that is an -SO2- or -CO- group, is present between the arylene units. The polysulphone possesses recurring units of the formula O-E-O-E1, where E is a dihydroxy unit as described earlier, and E1 an arylene unit. Such polysulphone polymers are generally described as a polyarylene ether resin, see for instance US-A-3264536 and US-A-4108837.

The polyphenylene ethers are homopolymers and copolymers on the basis of phenoxy units, which may be substituted in the aromatic ring. Examples of polyphenylene ethers are given in US-A-3306874; US-A-3306875; US-A-3257357 and US-A-3257358. By preference the polyphenylene ether is poly(2,6-dimethyl-1,4-phenylene)-ether.

The polyamide-imide copolymers are prepared by polymerization of dianhydrides with diamines, as described in, for instance, Supplement Volume, Kirk-Othmer Encyclopedia of Chemical Technology, pp. 746-773 (1971).

Polyether imides are prepared by polymerization of equimolar amounts of aromatic bis-ether anhydrides and of organic diamines, according to known processes as mentioned in US-A-3917643; US-A-3853242; US-A-3855176; US-A-3833546; US-A-3875116; US-A-3838097; US-A-3905942; and US-A-3933749.

The vinylaromatic polymers are homo- and copolymers of styrene, substituted styrene and/or methyl styrene. Examples of such polymers are styrene-butadiene rubber (SBR); styrene acrylonitrile copolymer (SAN); styrene maleic anhydride (SMA); acrylonitrile-butadiene-styrene (ABS); methacrylonitrile-butadiene styrene (MBS); acrylonitrile-styrene-acrylate (ASA) and acrylonitrile-ethylene/propylene-styrene (AES).

Preferably, the thermoplastic polymer in the polymer composition obtained by the process according to the invention is a polyester, polyamide or a polycarbonate.

Depending on the desired properties, the polymer composition obtained may contain, besides the prepolymer of the high-melting polymer and besides the thermoplastic polymer, 0-50 wt.% of one or more prepolymers of the thermoplastic polymer. Addition of a minor amount of the thermoplastic prepolymer may lead to the formation of a block copolymer. The block copolymer formed not only has a favourable effect on the properties, but increases the stability of the polymer composition obtained. By preference, 0-33 wt.% of the thermoplastic prepolymer is added, more in particular 5-20 wt.%.

For the preparation of the polymer composition one or more of the above-mentioned polymers is/are melted in a mixing device. While subsequently the melt is being properly stirred, the finely ground prepolymer is added, and the mixture is kept at elevated temperature for some time. After cooling, the mixture obtained is ground and then after-condensed at a temperature of 200-350¤C during 1-40 hours.

After-condensation is preferably carried out during 10-20 hours at a temperature of 230-320¤C. It also is possible to add the thermoplastic polymer to the melt of the prepolymer or to melt and mix the two components in the solid phase in a mixing device. Preferably, the polymer compositions prepared are those in which the temperature ranges, within which the thermoplastic polymer and the prepolymer are in the liquid phase, have an overlap of at least 5¤C.

As said earlier, the process according to the invention renders it possible to mix high-melting polymers with a second polymer, the decomposition temperature of which is low compared with the melting point of the high-melting polymer, without decomposition occurring. Mixing of, for instance, a liquid-crystalline prepolymer and a polyester such as polyethylene terephthalate leads to a higher decomposition temperature of the latter.

The decomposition temperature of a polymer is the temperature at which more than 5 weight per cent of the polymer is lost due to decomposition.

Mixing of the prepolymer and the polymer may take place in a reactor or in the usual mixing devices. Examples are batch kneaders, single or double screw extruders, or static mixers.

The polymer composition before after-condensation contains 1-99 wt.% of one or more prepolymers of a high-melting polymer, and 99-1 wt.% of one or more thermoplastic polymers with a melting point and/or decomposition temperature that is lower than the melting point of the high-melting polymer, and 0-50 wt.% of one or more prepolymers of the thermoplastic polymer.

By preference the polymer composition contains 5-80 wt.% of one or more prepolymers of the high-melting polymer, more in particular 10-60 wt.%.

The polymer composition obtained upon after-condensation, of which at least one polymer has been obtained by polycondensation, is characterized in that the polymer composition is composed of at least two polymers, A and B, the high-molecular polymer that corresponds to A having, in pure condition, a melting point that is higher than the melting point or the decomposition temperature of the pure, high- molecular

polymer corresponding to B. By preference, the polymer composition contains a block copolymer of A and B and polymer A is a liquid-crystalline polymer or a polyarylate. A high-molecular polymer is understood to be a polymer of which the number average degree of polymerization is well in excess of 21.

The polymer composition according to the invention can be processed in the known way into moulding compounds that are very suitable for applications where high demands are to be met as regards temperature resistance and chemical resistance. Examples are electrical apparatus, ovenware, and printed circuit boards.

The polymer composition according to the invention is particularly suitable for the preparation of films and fibres in which the strength of the film or the fibre is especially important. Films or fibres prepared from the polymer composition therefore are eminently suitable for use in the textile and packaging industries.

The conventional additives may be added to the polymer composition according to the invention, for instance glass, stabilizers, lubricants and the organic and the inorganic fillers and reinforcing agents.

The invention will further be elucidated with the following examples, without being restricted thereto.

Example 1

265.8 g (1.6 moles) terephthalic acid, 297.9 g (1.6 moles) p,p-biphenol, 442.0 g (3.2 moles) p-hydroxybenzoic acid, 1 g K2SO4 and 750 g acetic anhydride were introduced into a reaction flask provided with a reflux cooler and a stirrer. Under N2 and while being stirred, the mixture was heated from room temperature to 150¤C. After 3 hours' reflux at 150¤C, the reflux cooler was replaced by a distillation cooler, and the temperature was regularly increased to 315¤C in four hours' time, the mixture meanwhile being stirred. During these 4 hours the acetic acid formed and the excess of acetic anhydride were distilled off. At 310¤C 1 g antioxidant WESTON 618 HT was stirred through the liquid prepolymer. The liquid reaction mixture was subsequently cooled under N2 and the solidified product was finely ground. Calculated from the amount of acetic acid distilled off, corrected for the amount of acetic acid released in the acetylation, the conversion for polycondensate (I) was found to be 89%.

Under N2 and while being stirred, 20 g polyethylene terephthalate (PET, Arnite R A 04 900, AKZO) was melted at a temperature of 300¤C. To the melt, 20 g of the above-mentioned polycondensate (Tm < 300¤C) was added, followed by stirring under N2 for 8 minutes. The blend of PET and prepolymer (I) was cooled under N2, finely ground ($_{T}$ = 500 ) and after-condensed in the solid phase under N2 during 20 hours at 250¤C and during 3.5 hours at 300¤C.

Torsion modulus determination applied to a specimen compression-moulded from the blend yielded a Tg of 81¤C. (Tg, ArniteR A 04 900 = 79¤C). The blend had two melting points: Tm = 237¤C (Tm, Arnite A 04 900 = 247¤C) and Tm, after-condensate (I) = 373¤C. TGA* of the blend under an oxygen atmosphere did not exhibit any degradation for ≦ 390¤C.

More detailed TGA* data, derived from dried material, analyzed in an oxygen atmosphere, are presented in the table below. The TGA data were compared with TGA data for PET, with and without after-condensation; comparative examples A and B, respectively.

TABLE 1

| example | weight loss | |
|---|---|---|
| | 2.5% at: | 5% at |
| a) PET (Arnite$^R$ A O4 900, untreated grade) | -- | 418¤C |
| b) PET (Arnite$^R$ A O4 900, after 20 h 250¤C + 3.5 h 300¤C) | -- | 421¤C |
| I PET/polycondensate I 50/50 blend (see above) | 441 | 458¤C |
| TGA*: Thermogravimetric Analyser. | | |

From this example it is apparent that the addition of a prepolymer to a PET leads to a higher decomposition temperature compared with a PET in pure condition.

Example 2

A prepolymer, polycondensate (I), on the basis of terephthalic acid, p,p-biphenol and p-hydroxybenzoic acid, was synthesized as described in Example 1.

Low-molecular polyethylene terephthalate was synthesized from dimethyl terephthalate (DMT) and ethylene glycol (EG) according to the method of Günther and Zachmann (Polymer, 24 (1983) 1008). To the mixture were added (DMT : EG = 1:2) 0.122 moles % manganese acetate, 0.0288 moles % Sb2O3 and 0.03 moles % triphenyl phosphate (moles % determined relative to DMT).

In the first step DMT was transesterified with EG to bishydroxyethyl terephthalate (2 hours, 200¤C, 1 bar). In the second step, polycondensation of the diglycol ester was carried out in the melt, ethylene glycol being distilled off (15 min., 270¤C, 6.5 . $10^{-5}$ bar).

The PET produced had an $\overline{M}w$ = 5200 (= PET prepol. II).

Subsequently 15 g PET (ArniteR A 04 900, AKZO) under N2 was melted at 300¤C while being stirred. 20 g of polycondensate (I) (Tm < 300¤C) and 5 g of the PET prepol. (II) were added to the melt. Stirring took place for 8 minutes under N2.

The resulting polymer composition was cooled under N2, finely ground ($\phi$ = 500 $\mu$) and after-condensed in the solid phase under N2 during 20 hours at 250¤C and during 3.5 hours at 300¤C.

Torsion modulus determination applied to a specimen compression-moulded from the polymer composition yielded a Tg of 80¤C (Tg, ArniteR A 04 900 = 79¤C). The polymer composition had melting points at 239¤C (Tm, ArniteR A 04 900 = 247¤C) and at 370¤C.

TGA data on the polymer composition (II) and on PET are given in the table below. The samples were properly dried. Analysis was performed under an 02 atmosphere.

TABLE 2

| example | weight loss | |
|---|---|---|
| | 2.5% at: | 5% at |
| c) PET (Arnite$^R$ A O4 900, untreated grade) | -- | 418¤C |
| d) PET (Arnite$^R$ A O4 900, after 20 h 250¤C + 3.5 h 300¤C) | -- | 421¤C |
| II) PET/prepol (II) PET/Polycondensate (I) 37.5/12.5/50 | 449¤C | 465¤C |
| c,d are comparative examples | | |

Comparative example E

20 g of a liquid-crystalline polymer on the basis of terephthalic acid, p,p′-biphenol and p-hydroxybenzoic acid, with a molecular weight in excess of 10,000 (Xydar$^R$, SRT 300, Dart. Ind.)(Tm = 425¤C), was melted while being stirred. 20 g polyethylene terephthalate (Arnite$^R$, 04 900 AKZO) was added to the melt. The melt immediately displayed a brown discolouration. Analysis showed that decomposition of the polyethylene terephthalate had taken place.

## Claims

1. Process for the preparation of a polymer composition comprising several polymers, at least one of the polymers having a high melting point (Tm > 250¤C) and at least one of the polymers having been obtained by polycondensation, characterized in that the polymer composition is obtained by
a) mixing 1-99 wt.% of one or more prepolymers of a high-melting polymer with
b) 99-1 wt.% of one or more thermoplastic polymers with a melting point and/or decomposition temperature that is lower than the melting point of the high-melting polymer, and
c) 0-50% of one or more prepolymers of a thermoplastic polymer according to component b)
after which the resulting mixture is ground and subsequently after-condensed during 1-40 hours at a temperature of 200-360¤C.

2. Process according to claim 1, characterized in that the prepolymer is obtained from monomers with a maximum conversion of 95%.

3. Process according to either of claims 1-2, characterized in that the melting point of the prepolymer is 200-350¤C.

4. Process according to any one of claims 1-3, characterized in that the prepolymer possesses at least one aromatic unit.

5. Process according to any one of claims 1-4, characterized in that the prepolymer shows anisotropy in the melt.

6. Process according to any one of claims 1-5, characterized in that the prepolymer is at least composed of an oxybenzoyl unit, an aromatic dioxy-unit and an aromatic dicarboxyl unit.

7. Process according to any one of claims 1-6, characterized in that the thermoplastic polymer is chosen from the group: polyesters, polyamides, polycarbonates, copolyester carbonates, polyphenylene ethers and sulphides, polyarylenes, polyarylates, polysulphones, polyarylene ether ketones and sulphones, poly(amide) imides, polyether imides, polyether sulphones, polyacetales, polyacryla tes, polyether(-ether) ketones and vinylaromatic polymers or combinations thereof.

8. Process according to any one of claims 1-7, characterized in that the decomposition temperature of the thermoplastic polymer is lower than the melting point of the high-melting polymer.

9. Polymer composition comprising two or more polymers, of which at least one polymer has been obtained by polycondensation, characterized in that the polymer composition is at least composed of two polymers, A and B, the high-molecular polymer that corresponds to A having, in pure condition, a melting point that is higher than the melting point of pure, high-molecular polymer corresponding to B, and polymer A being a liquid crystalline polymer and/or a polyarylate.

10. Polymer composition, according to claim 9, characterized in that the high-molecular polymer that corresponds to A having, in pure condition, a melting point that is higher than the decomposition temperature of the pure, high-molecular polymer corresponding to B.

11. Polymer composition according to any one of claims 9-10, characterized in that the polymer composition contains moreover a block-copolymer of A and B.

12. Polymer composition on the basis of a thermoplastic polymer, characterized in that the polymer composition comprises:

- 1-99 wt.% of one or more prepolymers of a high-melting polymer, and
- 99-1 wt.% of one or more thermoplastic polymers with a melting point and/or decomposition temperature that is lower than the melting point of the high-melting polymer,
- 0-50 wt.% of one or more prepolymers of the thermoplastic polymer.

13. Polymer composition obtained wholly or partly in accordance with any one of claims 1-7.

14. Moulding compound consisting wholly or partly of the polymer composition obtained by the process according to any one of claims 1-8 or consisting of a polymer composition according to any one of claims 9-12.

15. Film consisting wholly or partly of the polymer composition obtained by the process according to any one of claims 1-8, or consisting of a polymer composition according to any one of claims 9-12.

16. Fibre consisting wholly or partly of the polymer composition obtained by the process according to any one of claims 1-8, or consisting of a polymer composition according to any one of claims 9-12.

17. Ovenware, obtained wholly or partly from a moulding compound according to claim 15.

18. Process as substantially described in the specification and/or the claims.

European Patent Office

# EUROPEAN SEARCH REPORT

Application Number

EP 88 20 2973

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X,Y | US-A-4 408 022 (D.E. CINCOTTA et al.) * Claims; column 10, line 63 - column 11, line 2 * --- | 1-18 | C 08 L 101/00<br>C 08 L 67/02 |
| X,Y | FR-A-2 252 367 (CIBA-GEIGY) * Claims; page 12, lines 23-41; page 13, example 1; page 10, lines 1,2 * --- | 1-18 | |
| D,Y | EP-A-0 030 417 (ICI) * Claims * ----- | 1 | |

TECHNICAL FIELDS SEARCHED (Int. Cl.4)

C 08 L

The present search report has been drawn up for all claims

| Place of search | Date of completion of the search | Examiner |
|---|---|---|
| THE HAGUE | 26-04-1989 | STIENON P.M.E. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P0401)